# EUROPÄISCHE PATENTSCHRIFT

(11) **EP 2 735 728 B1**
(45) Veröffentlichungstag und Bekanntmachung des Hinweises auf die Patenterteilung: **20.07.2016**
(21) Anmeldenummer: 13169214.7
(22) Anmeldetag: 24.05.2013
(51) Int. Cl.: F03B 7/00, F03B 17/06

(54) **Wasserkraftanlage**
Water power plant
Centrale hydroélectrique

(30) Priorität: 27.11.2012 DE 202012104612 U
(43) Veröffentlichungstag der Anmeldung: 28.05.2014
(73) Patentinhaber: Rehart GmbH, 91725 Ehingen (DE)
(72) Erfinder: Schülein, Klaus, 91717 Wassertrüdingen (DE); Wolff, Gerhard, 91550 Dinkelsbühl (DE)
(74) Vertreter: Nunnenkamp, Jörg

(56) Entgegenhaltungen:
- EP-A2- 1 930 597
- DE-A1- 4 139 134
- DE-A1-102010 007 157
- DE-U1-202009 009 598
- DE-U1-202010 017 800
- DE-U1-202010 017 803
- DE-U1-202011 108 819

## Beschreibung

Die Erfindung betrifft eine Wasserkraftanlage zum Erzeugen elektrischer Energie durch Umwandlung von Strömungsenergie eines strömenden Gewässers, mit einer in einem Trog angeordneten Arbeitsschnecke und davon angetriebenem Generator, und mit einer im Vergleich zur Arbeitsschnecke in gleicher Längserstreckung angeordneten gegenläufigen Förderschnecke, wobei der Trog ortsfest ausgelegt und dazu an eine Basisstruktur angeschlossen ist.

Eine Wasserkraftanlage des eingangs beschriebenen Aufbaus wird in der AT 509 209 A4 beschrieben. Vergleichbares gilt für die DE 20 2011 108 819 U1. Die bekannte Wasserkraftanlage bzw. Wasserkraftschnecke kombiniert die ein- oder mehrgängige Arbeitsschnecke mit einer ebenfalls ein- oder mehrgängigen Förderschnecke, die gegenläufig zur Arbeitsschnecke verläuft. Auf diese Weise ist die Förderschnecke beispielsweise in der Lage, Wasser in einer Förderrichtung entgegen zur Arbeitsrichtung von einem Unterwasser zum Oberwasser zu fördern.

Mit dem Wasser werden in der Regel stromaufwärts wandernde Fische und Flussbewohner befördert und können auf diese Weise die bekannte Wasserkraftschnecke relativ problemlos passieren. Das hat sich grundsätzlich bewährt. Allerdings arbeitet die bekannte Wasserkraftanlage in der Praxis derart, dass ein axial angeordnetes Trägerrohr realisiert wird, welches über Lager drehbar gelagert ist.

Außen am Trägerrohr ist die Arbeitsschnecke angebracht, die sich folglich mit dem Trägerrohr dreht. Die Arbeitsschnecke selbst ist dann auch noch mit einem Mantelrohr verbunden. Im Innern des Trägerrohres findet sich die entgegengesetzt zur Arbeitsschnecke verlaufende Förderschnecke und ist dazu mit dem Trägerrohr verbunden.

Sobald sich die Arbeitsschnecke durch das von oben bzw. vom Oberwasser einströmende Wasser zu drehen beginnt, sorgt die Förderschnecke über ihren Flüssigkeitszulauf unterhalb des unteren Wasserspiegels bzw. im Unterwasser dafür, dass beispielsweise Fische stromaufwärts über die Förderschnecke transportiert werden. Das heißt, die Arbeitsschnecke und die Förderschnecke formen insgesamt eine Baueinheit und drehen sich folglich mit gleicher Drehzahl. Dadurch wird ein besonders schonender Fischtransport zur Verfügung gestellt. Allerdings sind die bewegten Massen sehr groß, weil letztlich die Kombination aus Arbeitsschnecke und Förderschnecke vom zentralen Trägerrohr und den zugehörigen Lagern im Hinblick auf die erzeugten Drehbewegungen aufgenommen wird. Da heutzutage der Trend zu einer besonders effizienten Energieerzeugung und damit größtmöglichen Arbeitsschnecken geht und im Hinblick auf einen dauerhaften Betrieb der Anlagen kann die bekannte Konstruktion nicht (mehr) überzeugen. Denn aufgrund der großen bewegten Massen sind Lagerschäden und/oder ein unrunder Lauf auf mittleren bis langen Zeitskalen zu befürchten.

Das Grundprinzip der Arbeitsschnecke bzw. archimedischen Schnecke zur Energieerzeugung wird in der DE 41 39 134 A1 vorgestellt. Darüber hinaus und unabhängig hiervon sind Förderschnecken als Fischaufstiegshilfe bekannt, wie sie beispielsweise in der US 4,932, 149 beschrieben werden. In der Praxis kommen meistens Wasserkraftschnecken entsprechend der DE 41 39 134 A1 oder auch solche zum Einsatz, wie sie in dem Gebrauchsmuster DE 20 2009 009 598 U1 der Anmelderin beschrieben werden. Zusätzlich sind an diese Stelle oftmals Fischaufstiegshilfen in terrassierte Form realisiert, die zu einem insgesamt ausladenden Aufbau korrespondieren. Neben der aufwendigen Gestaltung ergibt sich in der Praxis als weiteres Problem, dass Fische die bisherigen und unabhängig von der Wasserkraftschnecke ausgelegten Aufstiegshilfen oftmals nicht nutzen.

Das lässt sich darauf zurückführen, dass das aus der Wasserkraftschnecke zur Stromerzeugung ausfließende Wasser eine sogenannte "Leitströmung" oder "Lockströmung" für die aufstiegswilligen Fische erzeugt und diese dann durch die Wasserkraftschnecke beispielsweise vom Unterwasser zum Oberwasser und auch umgekehrt befördert werden, wie dies zeichnerisch unter anderem in der EP 1 930 597 A2 dargestellt ist. Eine solche Lock- oder Leitströmung wird typischerweise bei Fischaufstiegsanlagen erzeugt, um die Fische mit Hilfe der Lockströmung in die Fischaufstiegsanlage und durch dieselbe zu leiten. Meistens werden Lockströmungen durch eine spitzwinklige Anordnung eines unteren Ablaufs aus der Fischaufstiegsanlage in das Fließgewässer zur Verfügung gestellt, wie dies prinzipiell in der DE 196 22 096 A1 beschrieben wird.

Sofern aufstiegswillige Fische in eine Wasserkraftschnecke hinein schwimmen, kann es teilweise zur Fischtötungen kommen, die sich regelmäßig auf die Bewegung der Schnecke im Vergleich zum Trog zurückführen lassen. Als Folge hiervon wird die Akzeptanz der überwiegend in der Praxis eingesetzten Wasserkraftanlagen zunehmend infrage gestellt. Hier will die Erfindung insgesamt Abhilfe schaffen.

Der Erfindung liegt das technische Problem zugrunde, eine derartige Wasserkraftanlage so weiter zu entwickeln, dass eine besonders dauerhafte und funktionsgerechte Lösung mit ökologischen Vorteilen zur Verfügung gestellt wird.

Zur Lösung dieser technischen Problemstellung ist eine gattungsgemäße Wasserkraftanlage zum Erzeugen elektrischer Energie im Rahmen der Erfindung dadurch gekennzeichnet, dass die Förderschnecke und die Arbeitsschnecke unabhängig voneinander ausgelegt sind und arbeiten.

Bei der Basisstruktur handelt es sich typischerweise um ein Trag- bzw. Haltegerüst für den die Arbeitsschnecke aufnehmenden Trog. Die Basisstruktur ist ortsfest ausgelegt und dazu mit einem am Aufstellungsort typischerweise vorhandenen bzw. zu erstellenden Fundament verbunden. In diesem Zusammenhang kann der Trog geschlossen ausgebildet sein und die Arbeitsschnecke in Gestalt eines beispielsweise zylindrischen Rohres vollständig umschließen. Im Regelfall arbeitet die Erfindung jedoch mit einem größtenteils halbzylindrischen Trog, der nach oben hin offen ausgelegt ist. Auf diese Weise werden Material und Gewicht gespart.

Hinzu kommt, dass der ortsfest ausgelegte Trog im Gegensatz zum Stand der Technik nach der AT 509 209 A4 nicht (mehr) mit der Arbeitsschnecke mitrotiert. Die bewegten Massen sind also gegenüber dem gattungsbildenden Stand der Technik deutlich reduziert. Tatsächlich dient die Basisstruktur zur ortsfesten Anbringung des Troges auf oder an dem Fundament meistens erfindungsgemäß auch dazu, eine Lagerung für ein Zentralrohr zur Verfügung zu stellen. Dieses Zentralrohr nimmt im Allgemeinen in seinem Innern die Förderschnecke auf und im Übrigen Schneckenflügel der Arbeitsschnecke, die außenumfangsseitig an das fragliche Zentralrohr angeschlossen sind bzw. mit dem Zentralrohr (fest) verbunden werden.

Bevorzugt ist die Förderschnecke folglich axial im Vergleich zur Arbeitsschnecke angeordnet bzw. in gleicher Axialrichtung wie die Arbeitsschnecke. Dabei hat sich im Rahmen einer ersten Variante eine zentrale Anordnung der Förderschnecke im Vergleich zur Arbeitsschnecke als günstig herausgestellt. Für die zentrale Anordnung der Förderschnecke im Vergleich zur Arbeitsschnecke dient im Allgemeinen das bereits angesprochene Zentralrohr, welches im Innern die Förderschnecke aufnimmt und an welches außenseitig die Schneckenflügel der Arbeitsschnecke angeschlossen sind.

Nach einer weiteren und besonders bevorzugten Variante ist die Förderschnecke neben der Arbeitsschnecke platziert. Um in diesem Zusammenhang einen wirksamen Fischaufstieg durch die Förderschnecke zu realisieren, wird die Strömung des aus der Arbeitsschnecke austretenden Wassers als Lockströmung für die Förderschnecke eingesetzt. Das heißt, die Strömung des aus der Arbeitsschnecke austretenden Wassers fungiert als Lockströmung für die Förderschnecke.

Hierbei geht die Erfindung von der Erkenntnis aus, dass der Fischbestand in fließenden Gewässern typischerweise rheophil, das heißt strömungsliebend, ist. Auf diese Weise können Fische durch besonders eingestellte Strömungsverhältnisse austrittsseitig der Wasserkraftanlage hin zum Eingang der Förderschnecke geleitet werden. Das heißt, das aus der Arbeitsschnecke austretende Wasser wird wie beschrieben als Lockströmung für die Förderschnecke genutzt, also derart, dass das aus der Arbeitsschnecke austretende Wasser eine in Richtung auf den Eingang der Förderschnecke gerichtete Lockströmung erzeugt.

Dazu sind meistens austrittsseitig der Arbeitsschnecke Leiteinrichtungen vorgesehen. Bei diesen Leiteinrichtungen kann es sich um ein oder mehrere Leitbleche handeln, mit deren Hilfe das aus der Arbeitsschnecke austretende Wasser so umgelenkt wird, dass sich die bereits beschriebene Lockströmung in Richtung auf den Eingang der Förderschnecke einstellt. Außerdem hat es sich in diesem Zusammenhang als günstig erwiesen, wenn der Eingang bzw. Einlass zur Förderschnecke in einem Beruhigungsbecken liegt, so dass mit Hilfe der Leiteinrichtung die fragliche Lockströmung erzeugt werden kann und gegenüber dem meistens ruhenden übrigen Wasser im Beruhigungsbecken besonders signifikant ausgeprägt ist. Dabei versteht es sich, dass die Leiteinrichtung wahlweise verstellbar und/oder austauschbar ausgebildet ist. Hier kann mit entsprechend ausgelegten Leitblechen gearbeitet werden.

Dabei sind die Förderschnecke und die Arbeitsschnecke grundsätzlich unabhängig voneinander ausgelegt und arbeiten. Das heißt, die Förderschnecke rotiert im Zentralrohr oder außerhalb unabhängig von der Arbeitsschnecke. Sowohl die Förderschnecke als auch die Arbeitsschnecke lassen sich in diesem Zusammenhang mit jeweils unterschiedlichen Drehzahlen betreiben. Es ist auch möglich, nur die Arbeitsschnecke zu betreiben, wohingegen die Förderschnecke ruht.

Das kann im Detail und beispielsweise so realisiert werden, dass die Arbeitsschnecke und die Förderschnecke mit voneinander abweichenden Wellen ausgerüstet werden. Im Regelfall fungiert das Zentralrohr als rotierende Welle der Arbeitsschnecke, wobei der von der Arbeitsschnecke angetriebene Generator beispielsweise über eine Ritzelanordnung, einen Keilriemen etc. oder auch direkt mit dem fraglichen Zentralrohr verbunden ist oder gekoppelt werden kann.

Im Allgemeinen verfügt die Förderschnecke über eine eigene Welle, an die die Schneckenflügel der Förderschnecke angeschlossen sind. Es kann aber auch mit einem eigenen Zentralrohr gearbeitet werden, welches die Schneckenflügel innenumfangsseitig aufnimmt und umschließt. Dadurch lassen sich die Förderschnecke einerseits und die Arbeitsschnecke andererseits unabhängig voneinander rotieren. Als Folge hiervon können die Förderschnecke und die Arbeitsschnecke miteinander entsprechender oder voneinander abweichender Drehzahl rotieren.

Nach einer ersten Variante ist die Förderschnecke nicht mit einer eigenen Welle ausgerüstet. Vielmehr sind die Schneckenflügel der Förderschnecke innenseitig an das Zentralrohr der Arbeitsschnecke angeschlossen. Außenumfangsseitig des Zentralrohres finden sich die Schneckenflügel der Arbeitsschnecke. Zwischen dem äußeren Rand der Schneckenflügel der Arbeitsschnecke und dem die Arbeitsschnecke aufnehmenden Trog mag ein (kleiner) Spalt vorhanden sein, welcher die Rotation der Arbeitsschnecke in Verbindung mit der Förderschnecke gegenüber dem feststehenden Trog ermöglicht.

Nach einer besonders bevorzugten Ausführungsform ist die Förderschnecke jedoch neben der Arbeitsschnecke angeordnet. Dabei verfügen die Förderschnecke einerseits und die Arbeitsschnecke andererseits über jeweils eigene Wellen mit zugehörigen Schneckenflügeln. Der Abstand zwischen der Arbeitsschnecke und der Förderschnecke ist dabei so gewählt, dass austrittsseitig der Arbeitsschnecke mit Hilfe der bereits beschriebenen Leiteinrichtung die angesprochene Lockströmung am Eingang bzw. Einlauf der Förderschnecke erzeugt werden kann.

Hierbei ist es grundsätzlich auch möglich, den Auslaufbereich der Arbeitsschnecke über einen Kanal mit einem entsprechenden Einlaufbereich der Förderschnecke zu verbinden, so lange die bereits angesprochene Lockströmung mit Hilfe des aus der Arbeitsschnecke austretenden Wassers eingangsseitig der Förderschnecke erzeugt wird. Eine solche Förderschnecke ist mit dem grundsätzlichen Vorteil gegenüber anderen Aufstiegshilfen ausgerüstet, dass den Fischen ein druckkonstanter Aufstieg ermöglicht wird, und zwar unter Berücksichtigung einer zugleich langsamen Bewegung. Das heißt, solche Förderschnecken werden nicht nur von den Fischen problemlos akzeptiert, sondern die Fische können die Förderschnecke auch gefahrlos bei ihrem Aufstieg passieren.

Eine im Regelfall ausgangsseitig der Förderschnecke vorgesehene Rutsche fungiert typischerweise als Fischrutsche und erleichtert den Übergang des mit Hilfe der Förderschnecke geförderten Wassers von der Förderschnecke ins Oberwasser. Selbstverständlich wird durch die Rutsche und insbesondere Fischrutsche auch der Übergang vom Oberwasser in die Förderschnecke vereinfacht.

Der Trog ist im Allgemeinen unter Berücksichtigung eines Aufstellwinkels von ca. 10° bis 30° und vorzugsweise ca. 20° gegenüber der Horizontalen geneigt. Die Horizontale wird dabei typischerweise von dem Fundament oder einer Fundamentplatte definiert.

Die Basisstruktur als solche ist im Wesentlichen mit zwei an den Trog angeschlossenen Längsstreben ausgerüstet. Darüber hinaus finden sich meistens mehrere den Trog unterseitig untergreifende und an die beidseitigen Längsstreben angeschlossene Stützstreben. Da der Trog typischerweise halbzylindrisch ausgelegt ist, verfügen die Stützstreben über eine entsprechende halbkreisförmige Gestalt, deren Radius an den Radius des halbzylindrischen Troges angepasst ist.

Wie bereits erläutert, kann das Zentralrohr in an der Basisstruktur vorhandenen Lagern aufgenommen werden. Zu diesem Zweck wird das Zentralrohr einerseits an einer ausgangsseitig des Troges vorgesehenen Tragkonsole hängend gelagert. Andererseits ist das Zentralrohr auf einem eingangsseitig des Troges vorgesehenen Stützanker gelagert und liegt auf diesem Stützanker auf. Zugehörige Lager einerseits in oder an der Tragkonsole und andererseits in oder an dem Stützanker sorgen dafür, dass das Zentralrohr gegenüber der Basisstruktur rotieren kann. Mit dem rotierenden Zentralrohr drehen sich auch gegebenenfalls die im Innern des Zentralrohres an das Zentralrohr angeschlossene Förderschnecke einerseits und die außenumfangsseitig an das Zentralrohr angeschlossenen Schneckenflügel der Arbeitsschnecke andererseits.

Ausgangsseitig des Troges kann der Trog an einen Flansch bzw. Konsolenflansch angeschlossen sein. Der Flansch gehört im Regelfall zu der Basisstruktur. Das heißt, die Basisstruktur setzt sich größtenteils aus dem Flansch, den beiden seitlich des Troges verlaufenden Längsstreben und den mehreren die Längsstreben miteinander verbindenden und den Trog untergreifenden Stützstreben zusammen. Außerdem gehört der Stützanker zur Basisstruktur.

Um etwaige durch die Neigung des Troges und folglich der Basisstruktur gegenüber der Horizontalen hervorgerufene Hangantriebskräfte besonders wirkungsvoll aufnehmen zu können, ist der Flansch typischerweise mit einem oder mehreren Stützwinkeln an das Fundament angeschlossen. Diese Stützwinkel sind an den Neigungswinkel des Troges und folglich der Basisstruktur angepasst und finden sich an einer ausgangsseitigen Randfläche des Flansches.

Im Ergebnis wird eine Wasserkraftanlage zur Verfügung gestellt, die zunächst einmal besonders funktionsgerecht und dauerhaft arbeitet sowie zur optimalen Erzeugung elektrischer Energie ausgelegt und geeignet ist. Tatsächlich arbeitet die Erfindung mit einem im Vergleich zum Stand der Technik Minimum an rotierenden Massen, weil der besonders massiv ausgestaltete Trog ortsfest ausgelegt ist und über eine angeschlossene Basisstruktur Kräfte in ein die Basisstruktur tragendes Fundament problemlos einleitet. Darüber hinaus werden die das rotierende Zentralrohr aufnehmenden Lager von der Basisstruktur getragen. Etwaige an dieser Stelle auftretende Kräfte werden über die Basisstruktur ebenfalls in das Fundament eingeleitet. Das alles trägt zu einem besonders dauerhaften und problemlosen Betrieb auch bei großvolumigen Anlagen bei.

Hinzu kommt, dass die Kombination aus Arbeitsschnecke und Förderschnecke den etwaigen Fischauf- und -abstieg durch die Förderschnecke begünstigt. Typischerweise ist die Förderschnecke von ihrem Durchmesser her deutlich kleiner als die Arbeitsschnecke ausgelegt. Tatsächlich beobachtet man an dieser Stelle Durchmesserverhältnisse von mehr als 1,5 : 1 bzw. 2 : 1 oder 3 : 1 und noch mehr. Das heißt, der Durchmesser der Arbeitsschnecke beträgt das wenigstens Anderthalbfache bzw. das Zweifache und mehr des Durchmessers der Förderschnecke. Gleichwohl finden die Fische genügend Raum für ihren beispielsweise stromaufwärts gerichteten Aufstieg oder den stromaufwärts gerichteten Abstieg durch die Förderschnecke hindurch.

Das wird noch dadurch begünstigt, dass bei einer zentralen Anordnung der Förderschnecke im Innern der Arbeitsschnecke im unteren Abschnitt des Zentralrohres Öffnungen vorgesehen sein können, durch welche Flüssigkeit bzw. Wasser von der Arbeitsschnecke in die Förderschnecke übertreten kann. Bei der Anordnung der Förderschnecke neben der Arbeitsschnecke sorgt die bereits angesprochene Leiteinrichtung dafür, dass das die Arbeitsschnecke passierende austrittsseitige Wasser in den Einlaufbereich der Förderschnecke gelangt. In jedem Fall wird ein Teil des Wassers aus der Arbeitsschnecke in die innere Förderschnecke bzw. in ihren Einlaufbereich geleitet und erzeugt im Zulauf der Förderschnecke die angesprochene Lockströmung für die Fische. Dadurch schwimmen die Fische gegen die Strömung an oder mit der Strömung und werden dann von den überspülten Kammern der Förderschnecke übernommen. Da an dieser Stelle mit jeweils gleicher Wendelfüllung gearbeitet wird, ist eine Gefährdung der Fische bei ihrem Aufstieg nicht zu befürchten.

Als Folge hiervon findet ein besonders schonender Fischtransport vom Unterwasser zum Oberwasser und auch in der Gegenrichtung vom Oberwasser zum Unterwasser statt, was mit besonderen ökologischen Vorteilen verbunden ist und die Akzeptanz der erfindungsgemäßen Wasserkraftanlage gegenüber bisherigen Anlagen erhöht. Ganz abgesehen davon wird die Realisierung noch durch die besonders kompakte Bauform erleichtert, weil hierdurch etwaiger Landschaftsverbrauch auf ein Minimum reduziert wird bzw. das ohnehin vorhandene Flussbett für die Aufstellung und Anbringung der erfindungsgemäßen Wasserkraftanlage ausreicht. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Wasserkraftanlage in einer perspektivischen Übersicht nach einer ersten Variante,
- Fig. 2: einen Längsschnitt durch die Anlage nach Fig. 1,
- Fig. 3: die erfindungsgemäße Wasserkraftanlage in einer zweiten bevorzugten Ausgestaltung und
- Fig. 4: eine perspektivische Aufsicht auf den Gegenstand nach Fig. 3.

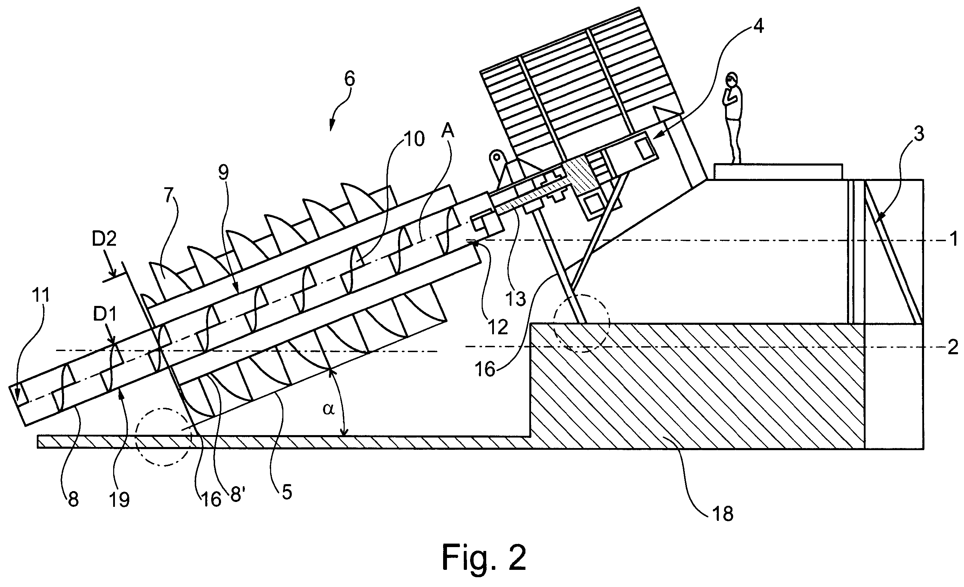

In den Figuren ist eine Wasserkraftanlage dargestellt, mit deren Hilfe elektrische Energie erzeugt wird. Das geschieht durch Umwandlung von Strömungsenergie eines strömenden Gewässers. Von dem strömenden Gewässer erkennt man in der Fig. 2 und jeweils strichpunktiert einen Oberwasserspiegel 1 und einen Unterwasserspiegel 2 bzw. ein Oberwasser 1 und Unterwasser 2. Ein zusätzlich vorgesehener Grobrechen 3 eingangsseitig der nachfolgend noch näher zu erläuternden Wasserkraftanlage dient dazu, etwaige Schwebstoffe, Äste etc. im Oberwasser bzw. entlang des Oberwasserspiegels 1 von der Wasserkraftanlage fernzuhalten. Wie üblich strömt das Wasser des nicht näher dargestellten Flusses ausgehend vom Oberwasserspiegel 1 durch die Wasserkraftanlage zum Unterwasserspiegel 2 und erzeugt hierbei elektrische Energie mit Hilfe eines Generators 4. Für den Antrieb des Generators 4 sorgt eine in einem Trog 5 angeordnete Arbeitsschnecke 6.

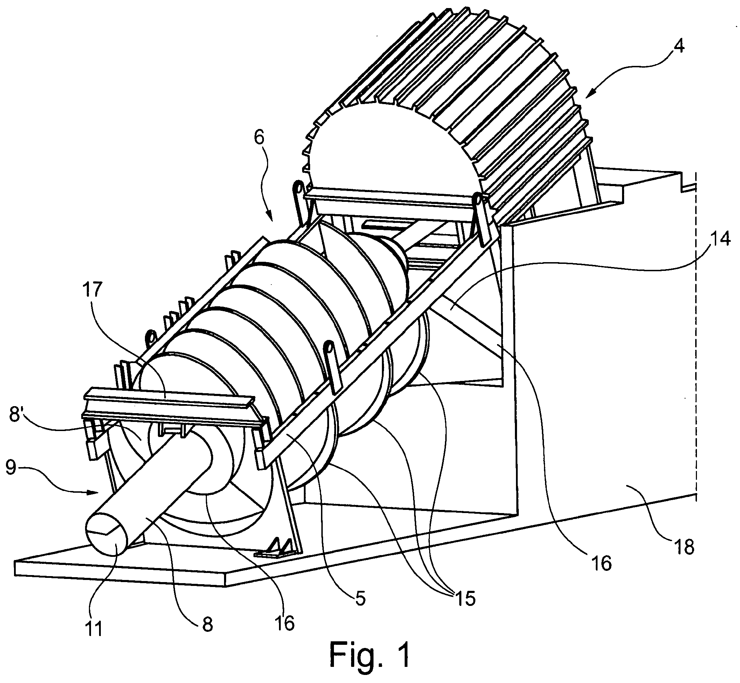

Die Arbeitsschnecke 6 ist ein- oder mehrgängig ausgelegt und weist dazu Schneckenflügel 7 auf, die außenumfangsseitig an ein Zentralrohr 8 bzw. 8', angeschlossen sind. Im Innern des Zentralrohres 8, 8' ist bei der Variante nach den Fig. 1 und 2 eine Förderschnecke 9 mit zugehörigen Schneckenflügeln 10 platziert. Die Förderschnecke 9 ist ebenfalls ein- oder mehrgängig ausgelegt und definiert einen Fischaufstieg 11 unterhalb des Unterwasserspiegels 2. Über den Fischaufstieg 11 können Fische durch die Förderschnecke 9 hindurch problemlos bis zum Oberwasser bzw. Oberwasserspiegel 1 gelangen. Selbstverständlich ist auch eine Wanderung in Gegenrichtung möglich. Dazu mündet die Förderschnecke 9 ausgangsseitig in eine Rutsche und insbesondere Fischrutsche 12. Nicht explizit dargestellt sind Öffnungen im unteren Abschnitt des Zentralrohres 8, 8', über welche Wasser von der Arbeitsschnecke 6 in die Förderschnecke 9 übertritt und auf diese Weise die einleitend bereits beschriebene Lockströmung erzeugt (vgl. Fig. 1 und 2).

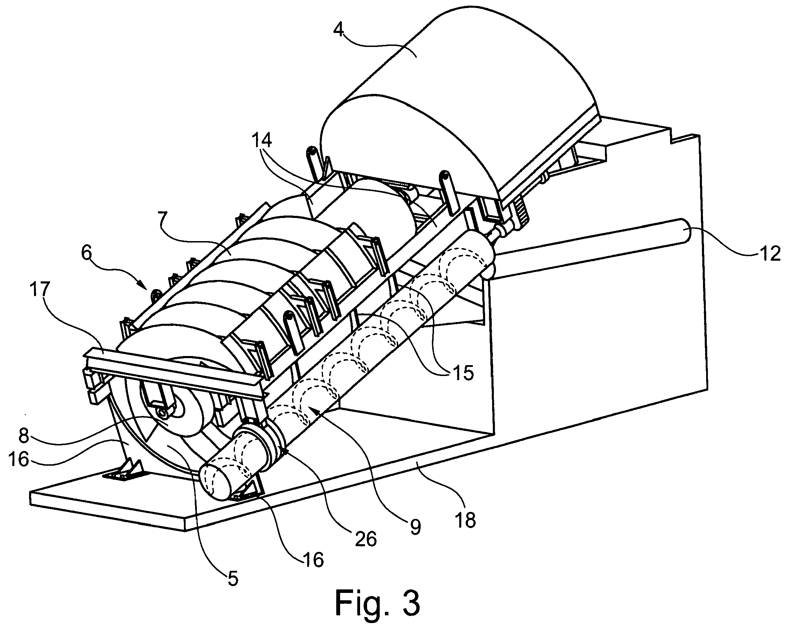

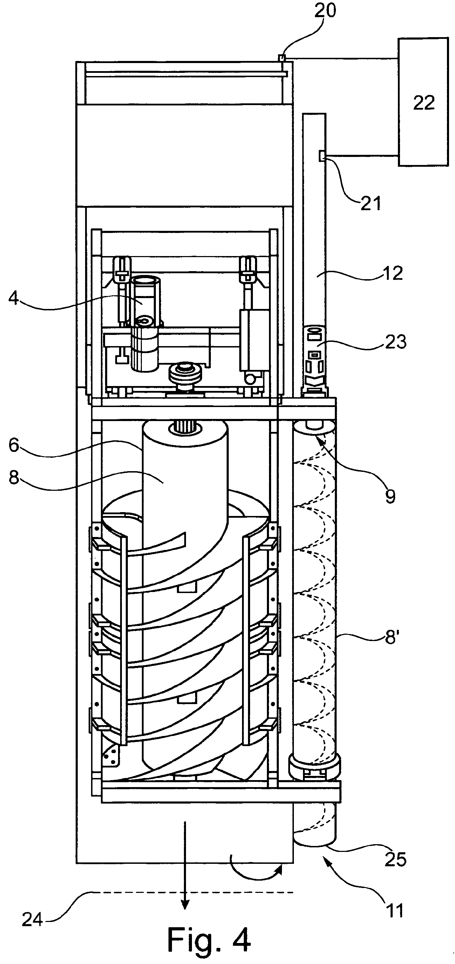

Man erkennt, dass die Förderschnecke 9 allgemein axial im Vergleich zur Arbeitsschnecke 6 angeordnet ist. Tatsächlich verfügt die Förderschnecke 9 im Ausführungsbeispiel nach den Fig. 1 und 2 über eine zentrale Anordnung im Vergleich zur Arbeitsschnecke 6 und ist bei der Variante nach den Fig. 3 und 4 daneben angeordnet. Die zentrale Anordnung wird anhand der gemeinsamen Zentralachse A gemäß der Darstellung in der Fig. 2 deutlich.

Das Zentralrohr 8, 8' zur Aufnahme der Förderschnecke 9 bzw. ihrer Schneckenflügel 10 ist im Ausführungsbeispiel nach den Fig. 1 und 2 zweiteilig aufgebaut und setzt sich im Wesentlichen aus einem Förderrohr 8 und einem Leerrohr 8' zusammen. Das Förderrohr 8 und das Leerrohr 8' sind konzentrisch im Vergleich zur gemeinsamen Achse A angeordnet. Im Innern des Förderrohres 8 ist die Förderschnecke 9 angeordnet. Tatsächlich sind die Schneckenflügel 10 der Förderschnecke 9 innenumfangsseitig an das Förderrohr 8 angeschlossen und füllen das Förderrohr 8 vollständig aus. Das Förderrohr 8 überragt axial jeweils das Leerrohr 8'.

Das Leerrohr 8' nimmt zentral das Förderrohr 8 mit der Förderschnecke 9 im Innern auf. An das Leerrohr 8' sind seinerseits außenumfangsseitig die Schneckenflügel 7 der Arbeitsschnecke 6 angeschlossen. Das kann beispielsweise über eine Schweiß-, Niet- oder vergleichbare Verbindung erfolgen. In ähnlicher Art und Weise sind die Schneckenflügel 10 der Förderschnecke 9 innenumfangsseitig an das Förderrohr 8 angeschlossen (vgl. Fig. 1 und 2).

Das Förderrohr 8 geht endseitig in eine Antriebswelle 13 für den Generator 4 über. Das heißt, der Generator 4 wird mit Hilfe der Arbeitsschnecke 6 in Rotationen versetzt und erzeugt auf diese Weise ausgangsseitig der Wasserkraftanlage die gewünschte elektrische Energie. Demgegenüber dient die Förderschnecke 9 nicht zur Energieerzeugung, sondern vielmehr dazu, Wasser und mit dem Wasser Fische vom Unterwasserspiegel 2 bis zum Oberwasserspiegel 1 zu fördern. Selbstverständlich ist auch ein Abstieg vom Oberwasserspiegel 1 zum Unterwasserspiegel 2 möglich und wird von der Erfindung umfasst. Das wird dadurch erreicht, dass die im Vergleich zur Arbeitsschnecke 6 in gleicher Längserstreckung angeordnete Förderschnecke 9 insgesamt gegenläufig ausgebildet ist und rotiert.

Von besonderer Bedeutung für die Erfindung ist nun der Umstand, dass der die Arbeitsschnecke 6 aufnehmende Trog 5 ortsfest ausgelegt ist. Hierzu ist der Trog 5 an eine Basisstruktur 14, 15, 16, 17 angeschlossen, die ihrerseits auf einem Fundament 18 ruht bzw. mit dem Fundament 18 verbunden ist. Das heißt, die Basisstruktur 14, 15, 16, 17 ist ortsfest ausgelegt. Das gleiche gilt für den an die Basisstruktur 14, 15, 16, 17 angeschlossenen Trog 5.

Im Vergleich zu dem ortsfesten Trog 5 rotieren im Ausführungsbeispiel das Zentralrohr 8, 8' und die außenumfangsseitig an das Zentralrohr 8, 8' angeschlossene Arbeitsschnecke 6 bzw. deren Schneckenflügel 7. Ebenso rotiert mit dem Zentralrohr 8, 8' die Förderschnecke 9 bzw. die innenumfangsseitig an das Zentralrohr 8, 8' angeschlossenen Schneckenflügel 10. Gemäß der Erfindung sind jedoch die Förderschnecke 9 und die Arbeitsschnecke 6 unabhängig voneinander ausgelegt und arbeiten. In diesem Fall rotiert die Förderschnecke 9 in dem fraglichen Zentralrohr 8, 8' unabhängig von der Arbeitsschnecke 6. Dann ist es auch möglich, mit voneinander abweichenden Drehzahlen von einerseits der Förderschnecke 9 und andererseits der Arbeitsschnecke 6 zu arbeiten.

Im dargestellten Beispiel rotieren jedoch die Förderschnecke 9 und die Arbeitsschnecke 6 mit gleicher Drehzahl und sind die Förderschnecke 9 und die Arbeitsschnecke 6 aneinander angeschlossen, nämlich unter Zwischenschaltung des gemeinsamen Zentralrohres 8, 8' wie beschrieben.

Man erkennt, dass der Trog 5 unter Berücksichtigung eines Aufstellwinkels α von ca. 10° bis 30° gegenüber einer Horizontalen geneigt ist. Die Horizontale wird im Ausführungsbeispiel von dem Fundament 18 bzw. einer Fundamentplatte 18 definiert. Der zugehörige Aufstellwinkel α beträgt nach dem Ausführungsbeispiel ca. 20° gegenüber der Horizontalen. Das ist selbstverständlich nicht zwingend.

Man erkennt ferner, dass die Basisstruktur 14, 15, 16, 17 mit im Wesentlichen zwei an den Trog 5 angeschlossenen Längsstreben 14 ausgerüstet ist. Darüber hinaus umfasst die Basisstruktur 14, 15, 16, 17 mehrere den Trog 5 untergreifende und an die Längsstreben 14 angeschlossene bzw. die Längsstreben 14 verbindende Stützstreben 15. Da der Trog 5 im Ausführungsbeispiel nach oben hin offen und halbzylindrisch ausgelegt ist, besitzen die Stützstreben 15 eine halbkreisförmige Gestalt, die an den halbzylindrischen Trog 5 angepasst ist. Zum weiteren Aufbau der Basisstruktur 14, 15, 16, 17 gehört noch eine Tragkonsole 17, an welcher das Zentralrohr 8, 8' hängend gelagert ist.

Darüber hinaus umfasst die Basisstruktur 14, 15, 16, 17 noch zwei Flansche 16 einerseits eingangsseitig des Troges 5 und andererseits ausgangsseitig des Troges 5. Der ausgangsseitige Flansch 16 ist als Konsolenflansch 16 ausgebildet und trägt kopfseitig die bereits angesprochene Tragkonsole 17 zur hängenden Lagerung des Zentralrohres 8, 8' des Troges 5. Außerdem liegt der Trog 5 ausgangsseitig auf dem Konsolenflansch 16 auf. Bei dem Flansch 16 eingangsseitig des Troges 5 handelt es sich demgegenüber um einen Stützanker 16, mit dessen Hilfe sich der Trog 5 gegenüber dem Fundament 18 abstützt. Im Bereich des Stützankers 16 kann ein weiteres (zweites) Lager - ergänzend zu dem von der Tragkonsole 17 gehaltenen Lager - für das Zentralrohr 8, 8' realisiert sein. Mit Hilfe der beiden Lager ist das Zentralrohr 8, 8'drehbar gelagert gegenüber der Basisstruktur 14, 15, 16, 17. Demgegenüber verfügt der Trog 5 über eine ortsfeste Anordnung.

Mit dem Zentralrohr 8, 8', rotieren die außenumfangsseitig an das Zentralrohr angeschlossenen Schneckenflügel 7 der Arbeitsschnecke 6. Diese werden durch das vom Oberwasserspiegel 1 zum Unterwasserspiegel 2 strömende Wasser in Rotationen versetzt. In gegenläufiger Richtung rotieren die Schneckenflügel 10 im Innern des Zentralrohres 8, 8' der Förderschnecke 9. Folgerichtig können in entgegengesetzter Richtung beispielsweise Fische vom Unterwasserspiegel 2 zum Oberwasserspiegel 1 durch die Förderschnecke 9 hindurch gelangen.

Damit der insgesamt schräg geneigte Trog 5 und die ebenfalls schräg geneigte Basisstruktur 14, 15, 16, 17 gegenüber dem horizontal angeordneten Fundament 18 nicht ausweichen, sind schließlich noch ein oder mehrere Stützwinkel 19 vorgesehen. Diese Stützwinkel 19 finden sich an einer ausgangsseitigen Randfläche des Konsolenflansches 16 einerseits und sind andererseits an das Fundament 18 angeschlossen. Dadurch werden etwaige und durch die Neigung des Troges 5 inklusive der Arbeitsschnecke 6 und Förderschnecke 9 erzeugte Hangabtriebskräfte aufgenommen und in das Fundament 18 eingeleitet.

Wie bereits erläutert, ist das Zentralrohr 8, 8' im Rahmen des Ausführungsbeispiels nach den Fig. 1 und 2 zweiteilig ausgelegt und setzt sich aus dem eigentlichen Förderrohr 8 zur Aufnahme der Schneckenflügel 10 der Förderschnecke 9 einerseits und andererseits dem das Förderrohr 8 umgebenden Leerrohr 8', zusammen, welches an seinem Außenumfang die Schneckenflügel 7 der Arbeitsschnecke 6 trägt. Auf diese Weise stellt sich ein Durchmesserverhältnis von einerseits dem Durchmesser D₁ der Förderschnecke 9 im Vergleich zum Durchmesser D₂ der Arbeitsschnecke 6 ein, welches wenigstens 1 : 1,5 und insbesondere 1 : 2 sowie vorzugsweise 1 : 3 und mehr beträgt.

Das heißt, der Durchmesser D₂ der Arbeitsschnecke 6 ist wenigstens anderthalbmal so groß wie der Durchmesser D₁ der Förderschecke 9. Insbesondere trägt der Durchmesser D₂ der Arbeitsschnecke 6 sogar das Doppelte oder Dreifache und mehr des Durchmessers D₁ der Förderschnecke 9. Diese Bemessungsregel trägt dem Umstand Rechnung, dass die erfindungsgemäße Wasserkraftanlage primär zur Stromerzeugung dient und folglich mit einem großen DurchmesserD₂ der Arbeitsschnecke 6 arbeitet. Demgegenüber reicht meistens ein kleiner Durchmesser D₁ der Förderschnecke 9 für den beschriebenen schonenden Fischaufstieg und Abstieg aus.

Bei dem abgewandelten und besonders bevorzugten Ausführungsbeispiel nach den Fig. 3 und 4 ist die Förderschnecke 9 neben der Arbeitsschnecke 6 angeordnet. Ansonsten entsprechen die Auslegung und die Arbeitsweise dem ersten Ausführungsbeispiel nach den Fig. 1 und 2, auf welches verwiesen sei. Man erkennt, dass die Förderschnecke 9 und die Arbeitsschnecke 6 in gleicher Axialerstreckung verlaufen. Außerdem ist die Auslegung meistens so getroffen, dass die zugehörigen Achsen der Welle bzw. des Zentralrohres 8 der Arbeitsschnecke 6 einerseits und der Welle bzw. des Zentralrohres 8' der Förderschnecke 9 andererseits in einer übereinstimmenden bzw. nach dem Ausführungsbeispiel in den Fig. 3 und 4 in voneinander beabstandeten parallelen Ebenen gleichgerichtet verlaufen.

Im Rahmen dieses Ausführungsbeispiels rotieren die Förderschnecke 9 und die Arbeitsschnecke 6 mit voneinander abweichender Drehzahl. Dazu kann beispielsweise mit Hilfe eines Sensors 20 einlaufseitig der Arbeitsschnecke 6 die Fließgeschwindigkeit des Oberwassers 1 ermittelt werden. Ein zusätzlicher weiterer Sensor 21 erfasst die Fördergeschwindigkeit der Förderschnecke 9 ausgangsseitig im Innern der Fischrutsche 12 bzw. eines an dieser Stelle vorgesehenen Rohres oder einer Rinne. Die entsprechenden Sensorwerte werden von einer Steuereinheit 22 verarbeitet.

Mit Hilfe der Steuereinheit 22 kann nicht nur die ausgangsseitige Leistung der Arbeitsschnecke 6 überwacht und gegebenenfalls an den Spiegel des Oberwassers 1 respektive denjenigen des Unterwassers 2 angepasst werden, sondern mit Hilfe der Steuereinheit 2 kann auch die Fördergeschwindigkeit der Förderschnecke 9 verändert werden. Dazu ist ein eigener Antrieb 23 für die Förderschnecke 9 vorgesehen.

Am strömungsseitigen Ausgang der Arbeitsschnecke 6 erkennt man eine Leiteinrichtung 24, die einen Teil oder das gesamte aus der Arbeitsschnecke 6 austretende und durch einen Pfeil angedeutete Wasser umlenkt, und zwar in Richtung auf einen Einlauf respektive Einlass 25 der Förderschnecke 9 und mithin den Fischaufstieg 11. Die Leiteinrichtung 24 ist verstellbar und auswechselbar ausgelegt, so dass die Größe und Ausprägung der auf diese Weise erzeugten Lockströmung im Bereich des Einlaufes bzw. Einlasses 25 der Förderschnecke 9 an die Gegebenheiten angepasst werden kann, insbesondere an den Oberwasserspiegel bzw. Unterwasserspiegel. Der Einlauf bzw. Einlass 25 der Förderschnecke 9 mag hierzu in einem Beruhigungsbecken platziert werden, um die durch das austretende Wasser erzeugte Lockströmung besonders effektiv in diesem Bereich definieren zu können.

Die Auslegung der Förderschnecke 9 ist durchweg so getroffen, dass die an dieser Stelle realisierten Wendeln innen an ein die Wendeln umgebendes Innenrohr bzw. das Zentralrohr 8' der Förderschnecke 9 angeschlossen sind. Meistens sind die Wendeln im fraglichen Innenrohr bzw. Zentralrohr 8' angeschweißt, und zwar typischerweise ohne Spalt. Dadurch kann sich die Förderschnecke 9 zusammen mit den Wendeln und dem die Wendeln umgebenden Innenrohr als Gesamtheit drehen. Zur Aufnahme dieser Drehbewegung ist ein unteres Lager 26 für die Förderschnecke 9 vorgesehen.

Bei diesem unteren Lager 26 für die Förderschnecke 9 handelt es sich um ein solches, dass mit einer Buchse aus insbesondere Stahl das Innenrohr bzw. Zentralrohr 8' der Förderschnecke 9 umgibt, welches innerhalb der Buchse rotiert. Das untere Lager 26 stützt sich auf dem Fundament 18 ab. Eine obere Lagerung für die Förderschnecke 9 wird über den an dieser Stelle realisierten Antrieb 23 zur Verfügung gestellt. Alternativ oder zusätzlich kann auch die dort vorgesehene Fischrutsche 12 als Lagerung fungieren.

Die Arbeitsschnecke 6 ist typischerweise aus Stahl hergestellt. Das gilt im Regelfall auch für die Förderschnecke 9. Grundsätzlich kann die Förderschnecke 9 aber auch ganz oder teilweise transparent ausgebildet sein. D. h., in diesem Fall ist die Welle bzw. das Zentralrohr 8' der Förderschnecke 9 beispielsweise aus einem transparenten Kunststoff gefertigt. Gleiches mag für die Wendeln im Innern des Zentralrohres 8' gelten.

Hierbei geht die Erfindung von der Erkenntnis aus, dass Fische insbesondere beim Fischaufstieg Helligkeit vorziehen und ungerne in einen dunklen Kanal schwimmen. D. h., die Förderschnecke 9 wird typischerweise für den Fischaufstieg genutzt. Dagegen kommt die Arbeitsschnecke 6 regelmäßig für den Fischabstieg zum Einsatz. Das ist in verschiedenen Untersuchungen verifiziert worden, zuletzt von Herrn Diplom Biologen Schmalz im Auftrag der Thüringer Landesanstalt für Umwelt und Geologie, dessen Abschlussbericht unter "tlugjena.de" zugänglich ist.

## Patentansprüche

1. Wasserkraftanlage zum Erzeugen elektrischer Energie durch Umwandlung von Strömungsenergie eines strömenden Gewässers, mit einer in einem Trog (5) angeordneten Arbeitsschnecke (6) und davon angetriebenem Generator (4), und mit einer im Vergleich zur Arbeitsschnecke (6) in gleicher Längserstreckung angeordneten gegenläufigen Förderschnecke (9), wobei der Trog (5) ortsfest ausgelegt und dazu an eine Basisstruktur (14, 15, 16, 17) angeschlossen ist, **dadurch gekennzeichnet, dass** die Förderschnecke (9) und die Arbeitsschnecke (6) unabhängig voneinander ausgelegt sind und arbeiten.

2. Wasserkraftanlage nach Anspruch 1, **dadurch gekennzeichnet, dass** die Förderschnecke (9) axial im Vergleich zur Arbeitsschnecke (6) angeordnet ist.

3. Wasserkraftanlage nach Anspruch 1 oder 2, **dadurch gekennzeichnet, dass** die Förderschnecke (9) zentral im Vergleich zur Arbeitsschnecke (6) oder neben der Arbeitsschnecke (6) angeordnet ist.

4. Wasserkraftanlage nach einem der Ansprüche 1 bis 3, **dadurch gekennzeichnet, dass** die Förderschnecke (9) in einem Zentralrohr (8, 8') der Arbeitsschnecke (6) platziert ist oder die Arbeitsschnecke (6) mit einem Zentralrohr (8) und die Förderschnecke (9) mit einem hiervon unabhängigen Zentralrohr (8') ausgerüstet sind.

5. Wasserkraftanlage nach Anspruch 4, **dadurch gekennzeichnet, dass** an das jeweilige Zentralrohr (8, 8') Schneckenflügel (7) der Arbeitsschnecke (6) bzw. der Förderschnecke (9) außenumfangseitig und/oder innenumfangseitig angeschlossen sind.

6. Wasserkraftanlage nach einem der Ansprüche 1 bis 5, **dadurch gekennzeichnet, dass** die Förderschnecke (9) unabhängig von der Arbeitsschnecke (6) rotiert.

7. Wasserkraftanlage nach einem der Ansprüche 1 bis 6, **dadurch gekennzeichnet, dass** die Förderschnecke (9) und die Arbeitsschnecke (6) mit einander entsprechender oder voneinander abweichender Drehzahl rotieren.

8. Wasserkraftanlage nach einem der Ansprüche 1 bis 7, **dadurch gekennzeichnet, dass** die Förderschnecke (9) ausgangsseitig in eine Rutsche, insbesondere Fischrutsche (12), mündet.

9. Wasserkraftanlage nach einem der Ansprüche 1 bis 10, **dadurch gekennzeichnet, dass** der Trog (5) unter Berücksichtigung eines Aufstellwinkels (α) von ca. 10° bis 30°, vorzugsweise ca. 20°, gegenüber einer Horizontalen geneigt ist.

10. Wasserkraftanlage nach einem der Ansprüche 1 bis 9, **dadurch gekennzeichnet, dass** die Basisstruktur (14, 15, 16, 17) im Wesentlichen zwei an den Trog (5) angeschlossene Längsstreben (14) und mehrere den Trog (5) untergreifende und die Längsstreben (14) miteinander verbindende Stützstreben (15) aufweist.

11. Wasserkraftanlage nach einem der Ansprüche 1 bis 10, **dadurch gekennzeichnet, dass** das Zentralrohr (8, 8') an einer ausgangsseitig des Troges (5) vorgesehenen Tragkonsole (17) hängend gelagert ist.

12. Wasserkraftanlage nach einem der Ansprüche 1 bis 11, **dadurch gekennzeichnet, dass** das Zentralrohr (8, 8') auf einem eingangsseitig des Troges (5) vorgesehenen Stützanker (16) aufliegt.

13. Wasserkraftanlage nach einem der Ansprüche 1 bis 12, **dadurch gekennzeichnet, dass** die Strömung des aus der Arbeitsschnecke (6) austretenden Wasser als Lochströmung für die Förderschnecke (9) fungiert.

14. Wasserkraftanlage nach Anspruch 13, **dadurch gekennzeichnet, dass** der Konsolenflansch (16) mit einem oder mehreren Stützwinkeln (19) an ein Fundament (18) angeschlossen ist.

## Claims

1. A hydroelectric installation for generating electrical energy by converting flow energy of flowing water, having a working screw (6) arranged in a trough (5) and a generator (4) driven thereby and having a counter-rotating screw conveyor (9) arranged in the same longitudinal extension compared with the working screw (6), wherein the trough (5) is of a fixed design and, to this end, is attached to a base structure (14, 15, 16, 17), **characterized in that** the screw conveyor (9) and the working screw (6) are designed and work independently of one another.

2. The hydroelectric installation according to claim 1, **characterized in that** the screw conveyor (9) is disposed axially in comparison with the working screw (6) .

3. The hydroelectric installation according to claim 1 or 2, **characterized in that** the screw conveyor (9) is arranged centrally in comparison with the working screw (6) or is arranged alongside the working screw (6) .

4. The hydroelectric installation according to one of claims 1 to 3, **characterized in that** the screw conveyor (9) is positioned in a central pipe (8, 8') of the working screw (6) or the working screw (6) is fitted with a central pipe (8) and the screw conveyor (9) with a central pipe (8') independent thereof.

5. The hydroelectric installation according to claim 4, **characterized in that** auger blades (7) of the working screw (6) or of the screw conveyor (9) are attached on the outer peripheral side and/or the inner peripheral side to the central pipe (8, 8') in each case.

6. The hydroelectric installation according to one of claims 1 to 5, **characterized in that** the screw conveyor (9) rotates independently of the working screw (6).

7. The hydroelectric installation according to one of claims 1 to 6, **characterized in that** the screw conveyor (9) and the working screw (6) rotate at a speed corresponding to one another or differing from one another.

8. The hydroelectric installation according to one of claims 1 to 7, **characterized in that** the screw conveyor (9) opens out into a chute, in particular a fishing chute (12), on the outlet side.

9. The hydroelectric installation according to one of claims 1 to 10, **characterized in that** the trough (5) is tilted in respect of the horizontal, taking account of a setting angle (α) of 10° to 30°, preferably of approx. 20°.

10. The hydroelectric installation according to one of claims 1 to 9, **characterized in that** the base structure (14, 15, 16, 17) substantially exhibits two longitudinal braces (14) attached to the trough (5) and a plurality of cross braces (15) engaging under the trough (5) and connecting the longitudinal braces (14) to one another.

11. The hydroelectric installation according to one of claims 1 to 10, **characterized in that** the central pipe (8, 8') is mounted in a suspending manner on a supporting bracket (17) provided on the outlet side of the trough (5).

12. The hydroelectric installation according to one of claims 1 to 11, **characterized in that** the central pipe (8, 8') is mounted on a supporting armature (16) provided on an inlet-side of the trough (5).

13. The hydroelectric installation according to one of claims 1 to 12, **characterized in that** the flow of water emerging from the working screw (6) acts as a hole flow for the screw conveyor (9).

14. The hydroelectric installation according to claims 13, **characterized in that** the bracket flange (16) is attached by one or a plurality of support angles (19) to a foundation (18).

## Revendications

1. Centrale hydroélectrique pour la production d'énergie électrique par conversion de l'énergie hydraulique d'une eau courante, avec une vis de travail (6) disposée dans une goulotte (5) et un générateur (4) actionné par celle-ci, et avec une vis transporteuse (9) à sens inverse, disposée sur la même étendue longitudinale que la vis de travail (6), la goulotte (5) étant conçue fixe et attachée à une structure de base (14, 15, 16, 17) à cette fin, **caractérisée en ce que** la vis transporteuse (9) et la vis de travail (6) sont conçues et fonctionnent indépendamment l'une de l'autre.

2. Centrale hydroélectrique selon la revendication 1, **caractérisée en ce que** la vis transporteuse (9) est disposée axialement par rapport à la vis de travail (6) .

3. Centrale hydroélectrique selon la revendication 1 ou 2, **caractérisée en ce que** la vis transporteuse (9) est disposée de façon centrale par rapport à la vis de travail (6) ou à côté de la vis de travail (6).

4. Centrale hydroélectrique selon l'une des revendications 1 à 3, **caractérisée en ce que** la vis transporteuse (9) est placée dans un conduit central (8, 8') de la vis de travail (6), ou **en ce que** la vis de travail (6) est dotée d'un conduit central (8) et la vis transporteuse (9) d'un conduit central (8') dépendant de celui-ci.

5. Centrale hydroélectrique selon la revendication 4, **caractérisée en ce que** des ailettes de vis (7) de la vis transporteuse (9) ou de la vis de travail (6) sont reliées au conduit central respectif (8, 8'), du côté du pourtour extérieur et/ou du pourtour intérieur.

6. Centrale hydroélectrique selon l'une des revendications 1 à 5, **caractérisée en ce que** la vis transporteuse (9) tourne indépendamment de la vis de travail (6).

7. Centrale hydroélectrique selon l'une des revendications 1 à 6, **caractérisée en ce que** la vis transporteuse (9) et la vis de travail (6) tournent à une vitesse correspondante ou différente.

8. Centrale hydroélectrique selon l'une des revendications 1 à 7, **caractérisée en ce que** la vis transporteuse (9) débouche sur une glissière, en particulier sur une glissière à poissons (12) côté sortie.

9. Centrale hydroélectrique selon l'une des revendications 1 à 10, **caractérisée en ce que** la goulotte (5) est inclinée par rapport à l'horizontale, en respectant un angle d'inclinaison d'environ 10° à 30°, de préférence d'environ 20°.

10. Centrale hydroélectrique selon l'une des revendications 1 à 9, **caractérisée en ce que** la structure de base (14, 15, 16, 17) présente essentiellement deux entretoises longitudinales (14) reliées à la goulotte (5) et plusieurs entretoises de support (15) reliant les entretoises longitudinales (14) entre elles et passant sous la goulotte (5).

11. Centrale hydroélectrique selon l'une des revendications 1 à 10, **caractérisée en ce que** le conduit central (8, 8') est monté en suspension sur une console de support (17) prévue à la sortie de la goulotte (5).

12. Centrale hydroélectrique selon l'une des revendications 1 à 11, **caractérisée en ce que** le conduit central (8, 8') repose sur une ancre de support (16) prévue à l'entrée de la goulotte (5).

13. Centrale hydroélectrique selon l'une des revendications 1 à 12, **caractérisée en ce que** l'écoulement de l'eau sortant de la vis de travail (6) est utilisé comme écoulement de perforation pour la vis transporteuse (9).

14. Centrale hydroélectrique selon la revendication 13, **caractérisée en ce que** la bride de console (16) est attachée à une fondation (18) avec une ou plusieurs équerres de support (19).
